# EUROPÄISCHE PATENTSCHRIFT

(11) **EP 3 612 350 B1**
(45) Veröffentlichungstag und Bekanntmachung des Hinweises auf die Patenterteilung: **01.10.2025**
(21) Anmeldenummer: 18719142.4
(22) Anmeldetag: 19.04.2018
(51) Int. Cl.: B24B 27/00, B24B 55/06, B24B 55/10

(54) **SCHLEIFMASCHINE ZUM ROBOTERGESTÜTZTEN SCHLEIFEN**
GRINDING MACHINE FOR ROBOT-SUPPORTED GRINDING
RECTIFIEUSE POUR RECTIFICATION ASSISTÉE PAR ROBOT

(30) Priorität: 20.04.2017 DE 102017108426
(43) Veröffentlichungstag der Anmeldung: 26.02.2020
(73) Patentinhaber: FerRobotics Compliant Robot Technology GmbH, 4040 Linz (AT)
(72) Erfinder: NADERER, Ronald, 4181 Oberneukirchen (AT)
(74) Vertreter: Westphal, Mussgnug & Partner, Patentanwälte mbB
(86) Internationale Anmeldenummer: PCT/EP2018/060054
(87) Internationale Veröffentlichungsnummer: WO 2018/193040

(56) Entgegenhaltungen:
- EP-A1- 0 252 552
- WO-A1-2016/145472
- DE-A1- 102005 036 195
- DE-A1- 102012 211 635
- US-A- 3 824 745
- US-B1- 6 969 310

## Beschreibung

### TECHNISCHES GEBIET

Die vorliegende Erfindung betrifft eine Schleifmaschine zum robotergestützten Schleifen, insbesondere eine kompakte und leichte Schleifmaschine zur Montage an einem Manipulator.

### HINTERGRUND

Bei robotergestützten Schleifvorrichtungen wird ein Schleifwerkzeug (z.B. eine elektrisch betriebene Schleifmaschine mit rotierender Schleifscheibe) von einem Manipulator, beispielsweise einem Industrieroboter, geführt. Dabei kann das Schleifwerkzeug auf unterschiedliche Weise mit dem sogenannten TCP *(Tool Center Point)* des Manipulators gekoppelt sein, sodass der Manipulator Position und Orientierung des Werkzeugs praktisch beliebig einstellen kann. Industrieroboter sind üblicherweise positionsgeregelt, was eine präzise Bewegung des TCP entlang einer gewünschten Trajektorie ermöglicht. Um beim robotergestützten Schleifen ein gutes Ergebnis zu erzielen ist in vielen Anwendungen eine Regelung der Prozesskraft (Schleifkraft) nötig, was mit herkömmlichen Industrierobotern oft nur schwer mit hinreichender Genauigkeit zu realisieren ist. Die großen und schweren Armsegmente eines Industrieroboters besitzen eine zu große Massenträgheit, als das ein Regler *(closed-loop controller)* rasch genug auf Schwankungen der Prozesskraft reagieren zu könnte. Um dieses Problem zu lösen, kann zwischen TCP des Manipulators und dem Schleifwerkzeug ein im Vergleich zum Industrieroboter kleiner Linearaktor angeordnet sein, der den TCP des Manipulators mit dem Schleifwerkzeug koppelt. Der Linearaktor regelt während des Schleifens lediglich die Prozesskraft (also die Anpresskraft zwischen Werkzeug und Werkstück) während der Manipulator das Schleifwerkzeug samt Linearaktor positionsgeregelt entlang einer vorgebbaren Trajektorie bewegt.

Die Publikation DE 10 2005 036 195 A1 zeigt eine Handschleifmaschine mit pneumatischem Antrieb, wobei der von einer Absaugvorrichtung bereitgestellte Sog ein Turbinenrad antreibt, das wiederum einen Schleifteller antreibt. Die Publikation US 3,824,745 A zeigt ebenfalls eine Handschleifmaschine mit Absaugung. Des Weiteren sei auf die Publikationen WO 2016/145472 A1 und US 6,969,310 B1 verwiesen.

Herkömmliche Orbital- oder Exzenterschleifmaschinen sind vergleichsweise leistungsschwach, weil sie für manuelles arbeiten ausgelegt sind. Der Roboter kann schneller und somit mit mehr Kraft arbeiten und benötigt dadurch mehr Schleifleistung. Eine kleine und kompakte Bauweise kann bei Orbital- oder Exzenterschleifmaschinen jedoch thermische Probleme verursachen. Des Weiteren können die Biegekräfte von Schläuchen und Kabeln Störkräfte bewirken, die die Prozesskraft beim Schleifen verändern, jedoch vom Regler nicht eliminiert werden können.

Die Erfinder haben es sich zur Aufgabe gemacht, eine kompakte Schleifmaschine zu entwickeln, welche für robotergestütztes Schleifen geeignet ist und eine vergleichsweise genaue Regelung der Prozesskraft beim Schleifen ermöglicht.

### ZUSAMMENFASSUNG

Die oben genannte Aufgabe wird durch die Schleifmaschine gemäß Anspruch 1, das Verfahren gemäß Anspruch 7 und die Vorrichtung gemäß Anspruch 10 gelöst. Unterschiedliche Ausführungsformen und Weiterentwicklungen sind Gegenstand der abhängigen Ansprüche.

Es wird eine Schleifmaschine beschrieben, die für einen robotergestütztes Schleifprozess geeignet ist. Gemäß einem Ausführungsbeispiel weist die Schleifmaschine ein Gehäuse, einen im Inneren des Gehäuses angeordneten Motor, ein an einer Motorwelle des Motors im Inneren des Gehäuses angeordnetes Lüfterrad und einen mit der Motorwelle gekoppelten Stützteller zur Aufnahme einer Schleifscheibe auf. Der Stützteller weist Öffnungen zum Ansaugen von Schleifstaub hinein ins Innere des Gehäuses auf. Die Schleifmaschine weist weiter einen in einer Wand des Gehäuses angeordneten Auslass zum Absaugen des Schleifstaubs aus dem Inneren des Gehäuses und ein in der Wand des Gehäuses angeordnetes Rückschlagventil auf. Das Rückschlagventil ermöglicht ein Austreten von Luft aus dem Inneren des Gehäuses, verhindert jedoch ein Einsaugen von Luft in das Innere des Gehäuses.

Des Weiteren wird eine Vorrichtung zum robotergestützten Schleifen beschrieben. Gemäß einem Ausführungsbeispiel umfasst die Vorrichtung einen Manipulator, eine Schleifmaschine, einen Linearaktor, der die Schleifmaschine mit einem TCP des Manipulators koppelt, und eine Absauganlage, welche mit einem Auslass im Gehäuse der Schleifmaschine verbunden ist.

Schließlich wird ein Verfahren zum Kühlen einer Schleifmaschine mit einem rotierbaren Stützteller zur Aufnahme einer Schleifscheibe beschrieben. Gemäß einem Ausführungsbeispiel umfasst das das Erzeugen eines Unterdruckes im Inneren des Gehäuses der Schleifmaschine mittels einer Absauganlage, die über einen Luftauslass in einer Gehäusewand mit dem Inneren des Gehäuses verbunden ist. Dabei wird durch den Unterdruck ein Luftstrom durch Öffnungen im Stützteller erzeugt, welcher Schleifstaub ins Innere des Gehäuses transportiert. Dieser wird dann über den Auslass in der Gehäusewand abgesaugt. Gleichzeitig wird durch den Luftstrom auch ein im Inneren des Gehäuses angeordneter Motor gekühlt. Im Falle einer inaktiven Absauganlage umfasst das Verfahren das Erzeugen eines weiteren Luftstromes zur Kühlung des Motors durch die Öffnungen im Stützteller mittels eines Lüfterrades, wodurch im Inneren des Gehäuses ein Staudruck erzeugt wird, sodass ein in der Gehäusewand angeordnetes Rückschlagventil öffnet und der weitere Luftstrom austreten kann.

### KURZE BESCHREBIBUNG DER ZEICHNUNGEN

Die Erfindung wird nachfolgend anhand von den in den Abbildungen dargestellten Beispielen näher erläutert. Die Darstellungen sind nicht zwangsläufig maßstabsgetreu und die Erfindung beschränkt sich nicht nur auf die dargestellten Aspekte. Vielmehr wird Wert darauf gelegt, die der Erfindung zugrunde liegenden Prinzipien darzustellen. In den Abbildungen zeigt:
Figur 1 zeigt schematisch ein Beispiel einer robotergestützten Schleifvorrichtung.
Figur 2 zeigt ein schematisches Beispiel einer Orbitalschleifmaschine mit kombinierter Luftkühlung und Absaugung.
Figur 3 zeigt das Beispiel aus Fig. 2 in einer Situation mit inaktiver Absaugungsanlage.
Figur 4 zeigt die rotierende Auflage (Stützteller) mit Öffnungen aus Fig. 2 in einer Ansicht von unten.
Figuren 5A und 5B, zusammen Fig. 5, zeigen ein Beispiel einer Kabelführung an einer robotergestützten Schleifvorrichtung.

### DETAILLIERTE BESCHREIBUNG

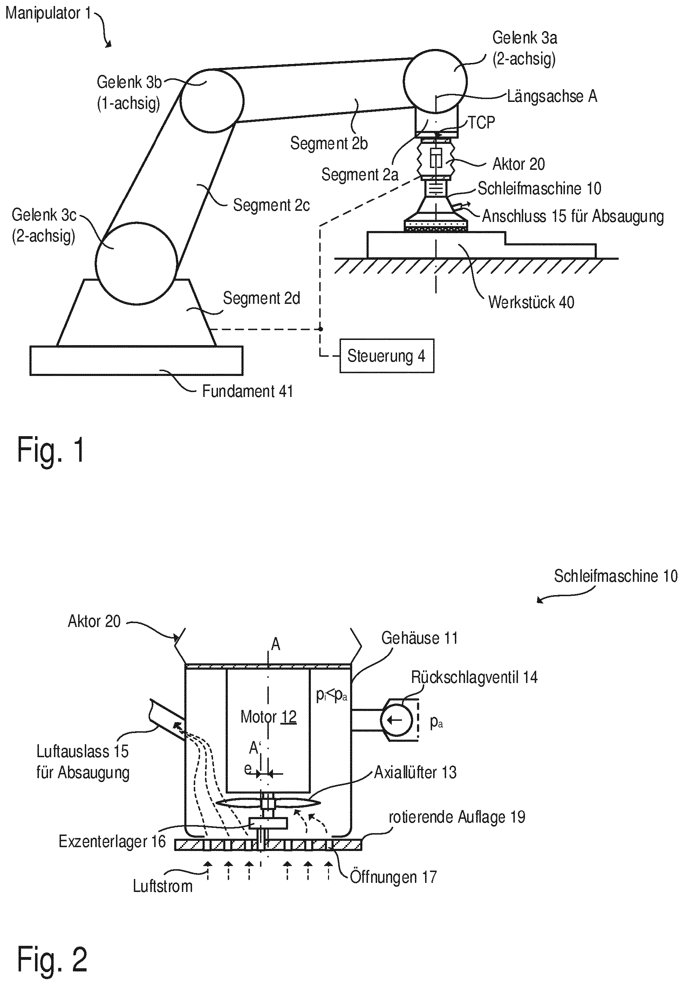

Bevor verschiedene Ausführungsbeispiele der vorliegenden Erfindung im Detail erläutert werden, wird zunächst ein Beispiel einer robotergestützten Schleifvorrichtung beschrieben. Diese umfasst einen Manipulator 1, beispielsweise einen Industrieroboter und eine Schleifmaschine 10 mit rotierendem Schleifwerkzeug (z.B. eine Orbitalschleifmaschine), wobei dieses mit dem sogenannten *Tool-Center-Point* (TCP) des Manipulators 1 über einen Linearaktor 20 gekoppelt ist. Im Falle eines Industrieroboters mit sechs Freiheitsgraden kann der Manipulator aus vier Segmenten 2a, 2b, 2c und 2d aufgebaut sein, die jeweils über Gelenke 3a, 3b und 3c verbunden sind. Das erste Segment ist dabei meist starr mit einem Fundament 41 verbunden (was jedoch nicht zwangsläufig der Fall sein muss). Das Gelenk 3c verbindet die Segmente 2c und 2d. Das Gelenk 3c kann 2-achsig sein und eine Drehung des Segments 2c um eine horizontale Drehachse (Elevationswinkel) und eine vertikale Drehachse (Azimutwinkel) ermöglichen. Das Gelenk 3b verbindet die Segmente 2b und 2c und ermöglicht eine Schwenkbewegung des Segments 2b relativ zur Lage des Segments 2c. Das Gelenk 3a verbindet die Segmente 2a und 2b. Das Gelenk 3a kann 2-achsig sein und daher (ähnlich wie das Gelenk 3c) eine Schwenkbewegung in zwei Richtungen ermöglichen. Der TCP hat eine feste Relativposition zum Segment 2a, wobei dieses üblicherweise noch ein Drehgelenk (nicht dargestellt) umfasst, dass eine Drehbewegung um eine Längsachse A des Segments 2a ermöglicht (in Fig. 1 als strichpunktierte Line eingezeichnet, entspricht der Drehachse des Schleifwerkzeugs). Jeder Achse eines Gelenks ist ein Aktor zugeordnet, der eine Drehbewegung um die jeweilige Gelenksachse bewirken kann. Die Aktoren in den Gelenken werden von einer Robotersteuerung 4 gemäß einem Roboterprogramm angesteuert.

Der Manipulator 1 ist üblicherweise positionsgeregelt, d.h. die Robotersteuerung kann die Pose (Ort und Orientierung) des TCP festlegen und diesen entlang einer vordefinierten Trajektorie bewegen. In Fig. 1 ist die Längsachse des Segments 2a, auf der der TCP liegt mit A bezeichnet. Wenn der Aktor 20 an einem Endanschlag anliegt, ist mit der Pose des TCP auch die Pose des Schleifwerkzeugs definiert. Wie eingangs bereits erwähnt, dient der Aktor 20 dazu, während des Schleifprozesses die Kontaktkraft (Prozesskraft) zwischen Werkzeug (Schleifmaschine 10) und Werkstück 40 auf einen gewünschten Wert einzustellen. Eine direkte Kraftregelung durch den Manipulator 1 ist für Schleifanwendungen in der Regel zu ungenau, da durch die hohe Massenträgheit der Segmente 2a-c des Manipulators 1 eine schnelle Kompensation von Kraftspitzen (z.B. beim Aufsetzen des Schleifwerkzeugs auf das Werkstück 40) mit herkömmlichen Manipulatoren praktisch nicht möglich ist. Aus diesem Grund ist die Robotersteuerung dazu ausgebildet, die Pose des TCP des Manipulators zu regeln, während die Kraftregelung ausschließlich vom Aktor 20 bewerkstelligt wird.

Wie bereits erwähnt, kann während des Schleifprozesses die Kontaktkraft F_{K} (auch als Prozesskraft bezeichnet) zwischen Werkzeug (Schleifmaschine 10) und Werkstück 40 mit Hilfe des (Linear-) Aktors 20 und einer Kraftregelung (die beispielsweise in der Steuerung 4 implementiert sein kann) so eingestellt werden, dass die Kontaktkraft (in Richtung der Längsachse A) zwischen Schleifwerkzeug und Werkstück 40 einem vorgebbaren Sollwert entspricht. Die Kontaktkraft ist dabei eine Reaktion auf die Aktorkraft, mit der der Linearaktor 20 auf die Werkstückoberfläche drückt. Bei fehlendem Kontakt zwischen Werkstück 40 und Werkzeug fährt der Aktor 20 aufgrund der fehlenden Kontaktkraft am Werkstück 40 gegen einen Endanschlag (nicht dargestellt da im Aktor 20 integriert). Die Positionsregelung des Manipulators 1 (die ebenfalls in der Steuerung 4 implementiert sein kann) kann vollkommen unabhängig von der Kraftregelung des Aktors 20 arbeiten. Der Aktor 20 ist nicht verantwortlich für die Positionierung der Schleifmaschine 10, sondern lediglich für das Einstellen und Aufrechterhalten der erwünschten Kontaktkraft während des Schleifprozesses und zur Erkennung von Kontakt zwischen Werkzeug und Werkstück.

Der Aktor kann ein pneumatischer Aktor sein, z.B. ein doppeltwirkender Pneumatikzylinder. Jedoch sind auch andere pneumatische Aktoren anwendbar wie z.B. Balgzylinder und Luftmuskel. Als Alternative kommen auch elektrische Direktantriebe (getriebelos) in Betracht. Es sei angemerkt, dass die Wirkrichtung des Aktors 20 nicht notwendigerweise mit der Längsachse A des Segments 2a des Manipulators zusammenfallen muss. Im Falle eines pneumatischen Aktors kann die Kraftregelung in an sich bekannter Weise mit Hilfe eines Regelventils, eines Reglers (implementiert in der Steuerung 4) und eines Druckluftspeichers realisiert werden. Die konkrete Implementierung ist jedoch für die weitere Erläuterung nicht wichtig und wird daher auch nicht detaillierter beschrieben. Schleifmaschinen weisen in der Regel eine Absaugung auf, um Schleifstaub abzusaugen. In Fig. 1 ist ein Anschluss 15 für einen Schlauch einer Absaugvorrichtung dargestellt. Auf diese Absaugung wird später noch detaillierter eingegangen.

Wie eingangs erwähnt kann die Massenträgheit der Schleifmaschine für eine präzise Regelung der Kontaktkraft (Prozesskraft) eine Rolle spielen. Eine kleine und kompakte Bauweise der Schleifmaschine hat jedoch größere Leistungsdichten zur Folge, was wiederum eine große Wärmeabgabe (und entsprechend hohe Temperaturen) auf vergleichsweise kleinem Raum bewirkt. Im Falle einer Orbitalschleifmaschine entsteht die Verlustwärme einerseits im Elektromotor der Schleifmaschine (z.B. ohmsche Verluste, Eisenverluste, Reibungsverluste in den Lagern) und andererseits im Exzenterlager, das die Orbitalbewegung ermöglicht. In den hier dargestellten Beispielen wird eine kompakte unter anderem dadurch erreicht, dass Kühlung und Absaugung kombiniert werden. Das heißt, im "normalen" Betrieb wird der von der Schleifstaubabsaugung bewirkte Luftstrom gleichzeitig zur Kühlung verwendet.

Figur 2 zeigt ein schematisches Beispiel einer Schleifmaschine 10 mit kombinierter Kühlung und Absaugung. Die Schleifmaschine 10 kann wie in Fig. 1 gezeigt an einem Manipulator 1 montiert sein, um einen robotergestützten Schleifprozess zu ermöglichen. Fig. 2 ist ein schematischer Längsschnitt entlang einer Längsachse A der Schleifmaschine 10 (kann mit der Achse des Segments 2a zusammenfallen, vgl. Fig. 1). Die Schleifmaschine 10 umfasst ein Gehäuse 11, welches eine im Wesentlichen zylindrische Grundform haben kann (jedoch nicht haben muss). In dem Gehäuse 11 ist ein Elektromotor 12 angeordnet. Die Drehachse der Motorwelle des Motors 12 entspricht auch der Längsachse A der Schleifmaschine 10. Im vorliegenden Beispiel ist die Motorwelle ist über ein Exzenterlager 16 mit einer rotierenden Auflage 19 (Stützteller, *backing pad)* gekoppelt, an der im Betrieb eine Schleifscheibe befestigt ist. Beispielsweise kann die Schleifscheibe mittels eines Klettverschlusses *(Velcro, hook-and-loop fastener)* an der rotierenden Auflage befestigt sein. Das Exzenterlager 16 ermöglicht eine Rotation der rotierenden Auflage um eine exzentrische Drehachse A', welche um die Längsachse A rotiert. Der axiale Versatz zwischen der Motorwelle (Drehachse A) und der exzentrischen Welle (Drehachse A') ist in Fig. 2 mit e bezeichnet. Der prinzipielle Aufbau des Antriebs der rotierenden Auflage 19 ist an sich bekannt und wird daher nicht detaillierter erläutert.

Wie erwähnt können Schleifmaschinen, insbesondere Orbitalschleifmaschinen, mit einer Absauganlage zur Absaugung von Schleifstaub gekoppelt sein. Die Absauganlage erzeugt - ähnlich einem Staubsauger - einen Unterdruck und ist mittels eines Schlauchs mit dem Inneren des Gehäuses 11 gekoppelt. Im vorliegenden Beispiel kann der Schlauch der Absauganlage an dem Luftauslass 15 angeschlossen sein. Während des Schleifbetriebs wird durch Öffnungen 17 in der rotierenden Auflage 19 Luft eingesaugt, wobei Staubteilchen von dem Luftstrom durch die Öffnungen 17 ins Innere des Gehäuses 11 transportiert und schließlich durch den Luftauslass 15 abgesaugt werden. Der Luftstrom durch das Gehäuse 11 ist in Fig. 2 durch die gestrichelten Pfeile dargestellt. Aufgrund des von der Absauganlage erzeugten Unterdrucks im Inneren des Gehäuses (Druck pᵢ im Inneren ist kleiner als der Umgebungsdruck pₐ) ist das in Fig. 2 dargestellte Rückschlagventil 14 geschlossen, welches das Innere des Gehäuses 11 mit der Umgebung verbindet. In der dargestellten Situation mit aktivierter Absaugung und geschlossenem Rückschlagventil 14 ist der an der Motorwelle befestigte Axiallüfter 13 eigentlich redundant und verstärkt den von der Absauganlage bewirkten Luftstrom.

Der von der Absaugung verursache Luftstrom kühlt gleichzeitig das Innere des Gehäuses und transportiert Wärme vom Motor 12 und dem Exzenterlager 16 ab. Aufgrund der kompakten Bauweise ist diese Kühlung notwendig, um ein Überhitzen der Schleifmaschine zu verhindern. Ohne Kühlung könnten Temperaturen von über 150° Schäden am Motor oder den mechanischen Komponenten verursachen. Nun besteht im Betrieb die Gefahr, dass die Absauganlage aus irgendeinem Grund nicht ordnungsgemäß funktioniert, beispielsweise weil ein Arbeiter vergisst, die Absauganlage einzuschalten, oder weil ein Luftschlauch sich gelöst hat, etc. Bei herkömmlichen Schleifmaschinen ist das in der Regel unproblematisch, weil einerseits aufgrund der weniger kompakten Bauweise die Abwärme geringer ist und andererseits Absaugung und Kühlung zwei voneinander unabhängige Subsysteme sind. Die hier beschriebene kompakte Bauweise der Schleifmaschine mit kombinierter Kühlung und Absaugung hängt jedoch von einer funktionierenden Absaugung ab, wenn nicht weitere Maßnahmen getroffen werden, die eine Überhitzung der Schleifmaschine verhindern, wenn die Absaugung nicht funktioniert. Wenn die Absaugung ausfällt ist der Axiallüfter 13 nicht immer in der Lage, eine ausreichende Konvektion zu erzeugen, insbesondere dann, wenn der Strömungswiderstand durch den Luftauslass 15 zu hoch ist. Das kann z.B. in Situationen der Fall sein, in denen die Absauganlage über einen Schlauch mit dem Luftauslass 15 verbunden ist, die Absauganlage jedoch ausgeschaltet oder ausgefallen ist.

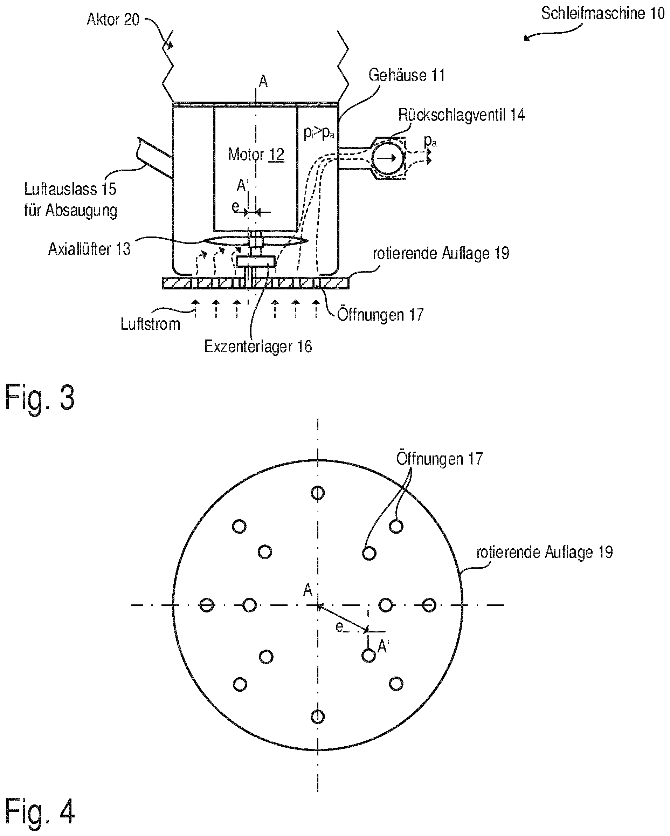

Figur 3 zeigt das Beispiel aus Fig. 2 in einer Situation mit inaktiver Absaugungsanlage. Um dennoch eine Überhitzung der Schleifmaschine 10 zu verhindern ist an der Motorwelle des Motors 12 ein (für den normalen Betrieb mit Absaugung eigentlich redundanter) Axiallüfter (Lüfterrad, Propeller) montiert, der zum Zwecke der Kühlung einen Luftstrom durch das Innere des Gehäuses erzeugen kann. Wie in Fig. 3 dargestellt saugt der Axiallüfter ebenfalls Luft durch die Öffnungen 17 an und erzeugt einen Luftstrom zur Kühlung des Inneren des Gehäuses 11. Wie erwähnt, können Situationen auftreten, in denen nicht gewährleistet ist, dass der vom Axiallüfter 12 erzeugte Luftstrom über den Auslass 15 nach außen geblasen werden kann. Wenn an dem Auslass 15 beispielsweise noch ein Schlauch befestigt ist, kann der Luftwiderstand des Schlauches so groß sein, dass der Axiallüfter 12 nicht genug Volumenstrom erzeugen kann, um das Innere des Gehäuses ausreichend zu kühlen. Aus diesem Grund weist die in Fig. 2 und 3 dargestellte Schleifmaschine ein Rückschlagventil 14 auf, welches ein Ausströmen von Luft aus dem Inneren des Gehäuses 11 in die Umgebung ermöglicht. Bei inaktiver Absauganlage erzeugt der Axiallüfter einen Innendruck pᵢ (Staudruck) im Gehäuse, der größer ist als der Umgebungsdruck pₐ. Folglich öffnet sich das Rückschlagventil und Luft kann bei vergleichsweise geringem Luftwiderstand über das Rückschlagventil 14 aus dem Gehäuse entweichen und dabei Wärme abführen. Bei Maschinen ohne separater (von der Absaugung unabhängiger) Kühlung ist demnach der Axiallüfter 13 - in Kombination mit dem Rückschlagventil 14 - ein Sicherheitsmerkmal, das eine Überhitzung des Motors verhindert, wenn die Absauganlage keinen ausreichenden Luftstrom für die Kühlung des Motors erzeugt. Der Axiallüfter kann (muss aber nicht) der einzige Lüfter im Gehäuse 11 sein. An dieser Stelle sei nochmal betont, dass im "normalen" Betrieb bei aktiver Absaugung der den Motor kühlende Luftstrom von der Absaugung erzeugt wird.

Figur 4 zeigt die rotierende Auflage 19 (Stützteller) mit Öffnungen 17 in einer Ansicht von unten. Wie erwähnt kann die Oberfläche der Auflage 19 haftend sein (z.B. mittels eines Klettverrschlusses), um eine Schleifscheibe daran zu befestigen. In Fig. 4 sind auch die Drehachse A der Motorwelle und die exzentrische Drehachse A' der Auflage 19 gezeigt. Es sei angemerkt, dass die hier beschriebenen Ausführungsbeispiele nicht auf Orbitalschleifmaschinen beschränkt sind. Die mit Bezug auf Fig. 2 und 3 beschriebene Kombinierte Kühlung und Absaugung ist auch auf andere Schleifmaschinen mit rotierendem Schleifwerkzeug (Schleifscheibe) anwendbar, auch wenn das Schleifwerkzeug eine reine Drehbewegung statt einer Orbitalbewegung ausführt.

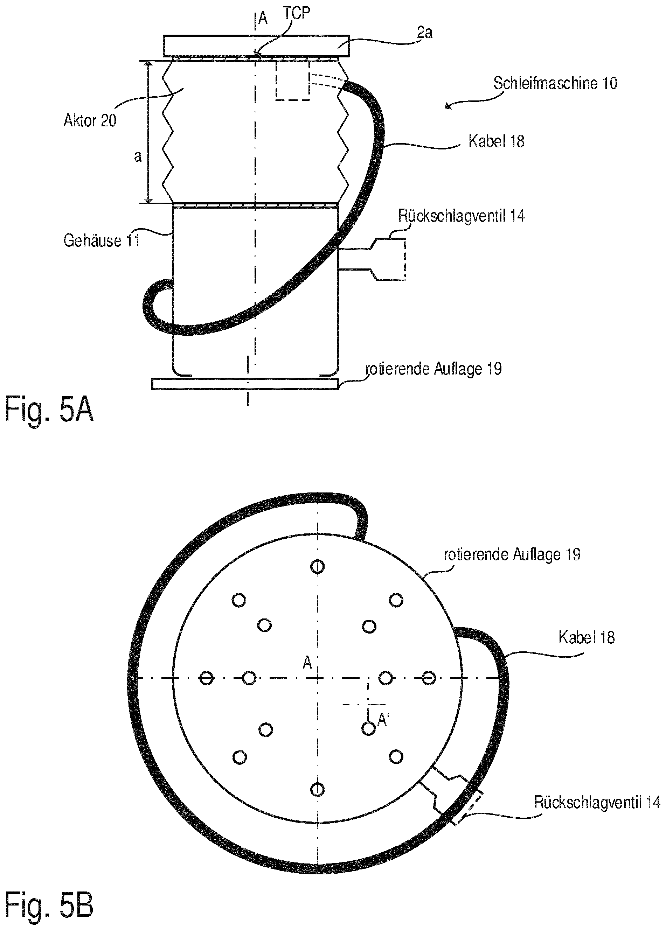

Wie eingangs erwähnt kann eine kompakte und leichte Bauweise der Schleifmaschine helfen, Massenträgheitskräfte zu verringern und die Regelung der Kontaktkraft zu verbessern. Ein weiterer Aspekt, der bei der Regelung der Kontaktkraft eine Rolle spielen kann, sind Störkräfte, welche durch eine Biegung von Kabel und Schläuche verursacht werden. Diese Störkräfte wirken parallel zum Aktor 20 (zwischen Schleifmaschine 10 und TCP des Manipulators 1) und können daher nicht ohne weiteres vom Aktor kompensiert werden. Die Figuren 5A und 5B zeigen ein Beispiel einer Kabelführung an einer robotergestützten Schleifvorrichtung mit Schleifmaschine 10 und Aktor 20, wobei die für den Betrieb der Schleifmaschine benötigten Kabel (elektrischen Leitungen) annähernd entlang einer spiralförmigen Kurve um die Längsachse A herum geführt sind. Fig. 5A ist eine schematische Ansicht von vorne und Fig. 5B eine schematische Ansicht von unten.

Die Führung des Kabels/der Kabel 18 entlang einer annähernd spiralförmigen Kurve (zumindest teilweise) um die Schleifmaschine 10 und den Aktor 20 herum bewirkt, dass bei einer Veränderung der Auslenkung *a* des Aktors 20 sich die Durchbiegung des Kabels 18 möglichst wenig ändern. Des Weiteren ermöglicht die spiralförmige Kabelführung allgemein sehr niedrige Störkräfte entlang der Längsachse A (d.h, entlang der Wirkrichtung des Aktors) aufgrund der Biegung der Kabel 18. Im Vergleich dazu sind bei einer konventionellen Kabelführung, bei der das Kabel 18 (bzw. die Kabel) an einer Seite des Aktors 20 zu einer Schlaufe gebogen wird (werden), die Störkräfte wesentlich größer und stärker veränderlich.

Der am Auslass 15 (siehe Fig. 3) angeschlossene Schlauch (nicht dargestellt), durch den der Schleifstaub abgesaugt wird, kann in ähnlicher Weise entlang einer spiralförmigen Kurve geführt werden, wie das (die) Kabel 18. Mehrere Kabel 18 können zusammen in einem Kabelschlauch geführt werden. Wie in Fig. 5 dargestellt ist ein Ende des Kabels 18 mit der Schleifmaschine 10 verbunden (und durch eine Wand des Gehäuses 11 durchgeführt), wohingegen das andere Ende des Kabels 18 mechanisch mit dem äußersten Segment 2a des Manipulators 1 verbunden ist.

Im Folgenden werden einige wichtige Aspekte der hier beschriebenen Ausführungsbeispiele zusammengefasst. Das folgende ist jedoch nicht als vollständige, sondern lediglich als exemplarische Aufzählung zu verstehen. Ein Ausführungsbeispiel betifft eine Schleifmaschine 10, die für einen robotergestütztes Schleifprozess geeignet ist (vgl. Fig. 2). Die Schleifmaschine weist ein Gehäuse 11, einen im Inneren des Gehäuses angeordneten Motor 12, ein an einer Motorwelle des Motors 12 im Inneren des Gehäuses angeordnetes Lüfterrad 13 und eine mit der Motorwelle 12 gekoppelten rotierbare Aufnahme 19 (Stützteller) zur Aufnahme einer Schleifscheibe auf. Der Stützteller hat Öffnungen 17 zum Ansaugen von Schleifstaub hinein ins Innere des Gehäuses 11 auf. Die Schleifmaschine 10 weist weiter einen in einer Wand des Gehäuses angeordneten Auslass 15 zum Absaugen des Schleifstaubs aus dem Inneren des Gehäuses 11 und ein in der Wand des Gehäuses 11 angeordnetes Rückschlagventil 14 auf. Das Rückschlagventil 14 ermöglicht ein Austreten von Luft aus dem Inneren des Gehäuses, verhindert jedoch ein Einsaugen von Luft in das Innere des Gehäuses (vgl. Fig. 2 und 3).

In einem Ausführungsbeispiel ist der Motor 12 derart im Innenraum des Gehäuses 11 angeordnet, dass der Luftstrom von den Öffnungen 17 im Stützteller 19 hin zum Auslass 15, mit dem der Schleifstaub abtransportiert wird, auch den Motor 12 kühlt. Der für die Absaugung erzeugte Luftstrom wird also auch für die Kühlung des Motors verwendet. Im Falle eines Orbitalschleifers weist die Schleifmaschine ein Exzenterlager 16 auf, welches die Motorwelle mit dem Stützteller 19 verbindet, sodass der Stützteller 19 eine Orbitalbewegung durchführen kann. Der erwähnte Luftstrom von den Öffnungen 17 im Stützteller 19 hin zum Auslass 15, mit dem der Schleifstaub abtransportiert wird, kühlt dabei auch das Exzenterlager 16.

Im Falle fehlender Absaugung durch den Auslass 15 tritt Luft, die mittels des Lüfterrades 13 durch die Öffnungen 17 im Stützteller 19 angesaugt wird, durch das Rückschlagventil 14 aus (siehe Fig. 3). In anderen Worten, das Lüfterrad 13 bewirkt einen Staudruck im Inneren des Gehäuses 11, sodass Luft aus Inneren des Gehäuses 11 durch das Rückschlagventil 14 in die Umgebung austreten kann.

Um die Störkräfte aufgrund mit der Schleifmaschine verbundener Kabel und Schläuche zu reduzieren, kann ein Kabel 18 zur Stromversorgung des Motors 12 annähernd spiralförmig um das Gehäuse 11 herumgeführt werden.

Ein weiterer Aspekt betrifft eine Vorrichtung zum robotergestützten Schleifen mit einen Manipulator 1 (z.B. ein Industrieroboter), eine Schleifmaschine 10 gemäß den hier beschriebenen Beispielen, einen Linearaktor 20, der die Schleifmaschine 10 mit einem TCP des Manipulators 1 koppelt, und eine Absauganlage, welche mit einem Auslass im Gehäuse der Schleifmaschine verbunden ist (vgl. Fig. 1 und 2). Ein weiterer Aspekt betrifft ein Verfahren zum Kühlen einer Schleifmaschine 10 mit einem rotierbaren Stützteller 19 zur Aufnahme einer Schleifscheibe. Das Verfahren umfasst das Erzeugen eines Unterdruckes im Inneren des Gehäuses 11 der Schleifmaschine 10 mittels einer Absauganlage, die über einen Luftauslass 15 in einer Gehäusewand mit dem Inneren des Gehäuses verbunden ist (siehe Fig. 2 und 3). Dabei wird durch den Unterdruck ein Luftstrom durch Öffnungen 17 im Stützteller 19 erzeugt, welcher Schleifstaub ins Innere des Gehäuses 11 transportiert. Dieser wird dann über den Auslass 15 in der Gehäusewand abgesaugt. Gleichzeitig wird durch den Luftstrom auch ein im Inneren des Gehäuses angeordneter Motor gekühlt. Im Falle einer inaktiven Absauganlage umfasst das Verfahren das Erzeugen eines weiteren Luftstromes zur Kühlung des Motors 12 durch die Öffnungen 17 im Stützteller 19 mittels eines Lüfterrades 13, wodurch im Inneren des Gehäuses 11 ein Staudruck erzeugt wird, sodass ein in der Gehäusewand angeordnetes Rückschlagventil 14 öffnet und der weitere Luftstrom austreten kann.

## Patentansprüche

1. Eine Schleifmaschine, die folgendes aufweist:
ein Gehäuse (11);
einen im Inneren des Gehäuses (11) angeordneten Motor (12);
ein an einer Motorwelle des Motors (12) im Inneren des Gehäuses angeordnetes Lüfterrad (13);
einen mit der Motorwelle gekoppelten Stützteller (19) zur Aufnahme einer Schleifscheibe, wobei der Stützteller (19) Öffnungen (17) zum Ansaugen von Schleifstaub hinein ins Innere des Gehäuses (11) aufweist;
ein in einer Wand des Gehäuses (11) angeordneter Auslass (15) zum Absaugen des Schleifstaubs aus dem Inneren des Gehäuses, wobei der Auslass (15) mit einer Absauganlage verbindbar ist, die einen Unterdruck im Inneren des Gehäuses (11) der Schleifmaschine erzeugen kann; und
ein in der Wand des Gehäuses (11) angeordnetes Rückschlagventil (14), welches ein Austreten von Luft aus dem Inneren des Gehäuses (11) ermöglicht, ein Einsaugen von Luft in das Innere des Gehäuses (11) jedoch verhindert,
wobei der Motor (12) derart im Innenraum des Gehäuses (11) angeordnet ist, dass der Luftstrom von den Öffnungen (17) im Stützteller (19) hin zum Auslass (15), mit dem der Schleifstaub abtransportiert wird, auch den Motor (12) kühlt.

2. Die Schleifmaschine gemäß Anspruch 1,
wobei der Motor (12) ein Elektromotor ist.

3. Die Schleifmaschine gemäß Anspruch 1, das weiter aufweist:
ein Exzenterlager (16), welches die Motorwelle mit dem Stützteller (19) verbindet, sodass der Stützteller eine Orbitalbewegung durchführen kann,
wobei der Luftstrom von den Öffnungen (17) im Stützteller (19) hin zum Auslass (15), mit dem der Schleifstaub abtransportiert wird, das Exzenterlager (16) kühlt.

4. Die Schleifmaschine gemäß einem der Ansprüche 1 bis 3,
bei der das Lüfterrad (13) und das Rückschlagventil (14) so angeordnet sind, dass - im Falle fehlender Absaugung durch den Auslass (15) - mittels des Lüfterrades (13) durch die Öffnungen (17) im Stützteller (19) angesaugte Luft durch das Rückschlagventil (14) austritt.

5. Die Schleifmaschine gemäß einem der Ansprüche 1 bis 4,
im Falle eines vom Lüfterrad (13) bewirkten Staudruckes im Inneren des Gehäuses (11) Luft aus Inneren des Gehäuses (11) durch das Rückschlagventil (14) in die Umgebung austreten kann.

6. Die Schleifmaschine gemäß einem der Ansprüche 1 bis 5, das weiter aufweist:
ein Kabel zur Stromversorgung des Motors (12), wobei das Kabel annähernd spiralförmig um das Gehäuse (11) herumgeführt ist.

7. Verfahren zum Kühlen einer Schleifmaschine mit einem rotierbaren Stützteller (19) zur Aufnahme einer Schleifscheibe; das Verfahren umfasst:
Erzeugen eines Unterdruckes im Inneren eines Gehäuses (11) der Schleifmaschine mittels einer Absauganlage, die über einen Luftauslass (15) in einer Gehäusewand mit dem Inneren des Gehäuses (11) verbunden ist,
wobei durch den Unterdruck ein Luftstrom durch Öffnungen (17) im Stützteller (19) erzeugt wird, der Schleifstaub ins Innere des Gehäuses (11) transportiert, der über den Auslass (15) in der Gehäusewand abgesaugt wird, und
wobei durch den Luftstrom auch ein im Inneren des Gehäuses (11) angeordneter Motor (12) gekühlt wird;
und wobei das Verfahren im Falle einer inaktiven Absauganlage umfasst:
Erzeugen eines weiteren Luftstromes zur Kühlung des Motors durch die Öffnungen (17) im Stützteller (19) mittels eines Lüfterrades (13), wodurch im Inneren des Gehäuses (11) ein Staudruck erzeugt wird, sodass ein in der Gehäusewand angeordnetes Rückschlagventil (14) öffnet und der weitere Luftstrom austreten kann.

8. Das Verfahren gemäß Anspruch 7,
wobei das Lüfterrad (13) an der Motorwelle des Motors (12) befestigt ist und einen Axiallüfter bildet.

9. Das Verfahren gemäß Anspruch 7 oder 8,
wobei das Rückschlagventil (14) bei aktiver Absauganlage geschlossen ist.

10. Vorrichtung zum robotergestützten Schleifen, die aufweist;
einen Manipulator;
einen Schleifmaschine gemäß einem der Ansprüche 1 bis 6;
einen Linearaktor (20), der die Schleifmaschine mit einem TCP des Manipulators koppelt;
eine Absauganlage, welche mit dem Auslass (15) im Gehäuse (11) der Schleifmaschine verbunden ist.

11. Vorrichtung gemäß Anspruch 10,
wobei die Wirkrichtung des Linearaktors (20) im Wesentlichen parallel zur Drehachse des Motors (12) verläuft.

12. Die Vorrichtung gemäß Anspruch 10 oder 11,
wobei die Absauganlage mit dem Auslass (15) über einen Schlauch verbunden ist, der annähernd spiralförmig um das Gehäuse (11) der Schleifmaschine und den Linearaktor angeordnet ist.

13. Die Vorrichtung gemäß einem der Ansprüche 10 bis 12,
wobei ein für den Betrieb der Schleifmaschine benötigtes Kabel annähernd entlang einer spiralförmigen Kurve um die Längsachse des Gehäuses (11) der Schleifmaschine und des Linearaktors (20) angeordnet sind, wobei ein Ende des Kabels mechanisch mit dem Manipulator gekoppelt ist.

14. Die Vorrichtung gemäß Anspruch 13,
wobei das Kabel zusammen mit weiteren Kabeln in einem Kabelschlauch (18) angeordnet sind.

15. Die Vorrichtung gemäß einem der Ansprüche 10 bis 14,
wobei die Absauganlage mit einem Auslass (15) an der Schleifmaschine über einen Schlauch (18) verbunden ist, der annähernd spiralförmig um das Gehäuse (11) der Schleifmaschine und den Linearaktor (20) angeordnet ist und mit einem Ende an dem Manipulator befestigt ist.

## Claims

1. A grinding machine having the following:
a housing (11);
a motor (12) arranged inside the housing (11);
a fan wheel (13) arranged on a motor shaft of the motor (12) inside the housing;
a support plate (19) coupled to the motor shaft for receiving a grinding wheel, wherein the support plate (19) has openings (17) for sucking grinding dust into the interior of the housing (11);
an outlet (15) arranged in a wall of the housing (11) for extracting the grinding dust from the interior of the housing, wherein the outlet (15) is connectable to an extraction system that can generate a negative pressure inside the housing (11) of the grinding machine; and
a check valve (14) arranged in the wall of the housing (11), which allows air to escape from the interior of the housing (11) but prevents air from being sucked into the interior of the housing (11),
wherein the motor (12) is arranged in the interior of the housing (11) in such a way that the air flow from the openings (17) in the support plate (19) to the outlet (15), with which the grinding dust is removed, also cools the motor (12).

2. The grinding machine according to claim 1,
wherein the motor (12) is an electric motor.

3. The grinding machine according to claim 1, further having:
an eccentric bearing (16) which connects the motor shaft to the support plate (19) so that the support plate can perform an orbital movement,
wherein the air flow from the openings (17) in the support plate (19) to the outlet (15), with which the grinding dust is removed, cools the eccentric bearing (16).

4. The grinding machine according to any one of claims 1 to 3, in which the fan wheel (13) and the check valve (14) are arranged in such a way that - in the event of no extraction through the outlet (15) - air sucked in by means of the fan wheel (13) through the openings (17) in the support plate (19) exits through the check valve (14).

5. The grinding machine according to any one of claims 1 to 4, in the event of a back pressure inside the housing (11) caused by the fan wheel (13), air can escape from the inside of the housing (11) through the check valve (14) into the environment.

6. The grinding machine according to any one of claims 1 to 5, further having:
a cable for supplying power to the motor (12), wherein the cable is guided approximately spirally around the housing (11).

7. A method for cooling a grinding machine with a rotatable support plate (19) for receiving a grinding wheel; the method comprises:
generating a negative pressure inside a housing (11) of the grinding machine by means of an extraction system which is connected to the interior of the housing (11) via an air outlet (15) in a housing wall,
wherein the negative pressure generates an air flow through openings (17) in the support plate (19), which transports grinding dust into the interior of the housing (11), which is sucked out via the outlet (15) in the housing wall, and
wherein the air flow also cools a motor (12) arranged inside the housing (11);
and wherein the method comprises, in the case of an inactive extraction system:
generating a further air flow for cooling the motor through the openings (17) in the support plate (19) by means of a fan wheel (13), whereby a back pressure is generated inside the housing (11) so that a check valve (14) arranged in the housing wall opens and the further air flow can escape.

8. The method according to claim 7,
wherein the fan wheel (13) is attached to the motor shaft of the motor (12) and forms an axial fan.

9. The method according to claim 7 or 8,
wherein the check valve (14) is closed when the extraction system is active.

10. A device for robot-supported grinding, having;
a manipulator;
a grinding machine according to any one of claims 1 to 6;
a linear actuator (20) coupling the grinding machine to a TCP of the manipulator;
an extraction system which is connected to the outlet (15) in the housing (11) of the grinding machine.

11. The device according to claim 10,
wherein the direction of action of the linear actuator (20) runs substantially parallel to the axis of rotation of the motor (12).

12. The device according to claim 10 or 11,
wherein the extraction system is connected to the outlet (15) via a hose which is arranged approximately spirally around the housing (11) of the grinding machine and the linear actuator.

13. The device according to any one of claims 10 to 12,
wherein a cable required for the operation of the grinding machine is arranged approximately along a spiral curve around the longitudinal axis of the housing (11) of the grinding machine and of the linear actuator (20), wherein one end of the cable is mechanically coupled to the manipulator.

14. The device according to claim 13,
wherein the cable is arranged together with other cables in a cable hose (18).

15. The device according to any one of claims 10 to 14,
wherein the extraction system is connected to an outlet (15) on the grinding machine via a hose (18) which is arranged approximately spirally around the housing (11) of the grinding machine and the linear actuator (20) and is fastened at one end to the manipulator.

## Revendications

1. Rectifieuse présentant ce qui suit :
un boîtier (11) ;
un moteur (12) disposé à l'intérieur du boîtier (11) ;
une roue de ventilateur (13) disposée sur un arbre moteur du moteur (12) à l'intérieur du boîtier ;
une plaque de support (19) couplée à l'arbre du moteur pour recevoir une meule, dans laquelle la plaque de support (19) présente des ouvertures (17) pour aspirer la poussière de meulage à l'intérieur du boîtier (11) ;
une sortie (15) disposée dans une paroi du boîtier (11) pour extraire la poussière de meulage de l'intérieur du boîtier, dans laquelle la sortie (15) peut être reliée à un système d'extraction qui peut générer une pression négative à l'intérieur du boîtier (11) de la rectifieuse ; et
un clapet anti-retour (14) disposé dans la paroi du boîtier (11), qui permet à l'air de s'échapper de l'intérieur du boîtier (11) mais empêche l'air d'être aspiré à l'intérieur du boîtier (11),
dans laquelle le moteur (12) est disposé à l'intérieur du boîtier (11) de sorte que le flux d'air des ouvertures (17) dans la plaque de support (19) vers la sortie (15) avec laquelle la poussière de meulage est éliminée, refroidit également le moteur (12).

2. Rectifieuse selon la revendication 1,
dans laquelle le moteur (12) est un moteur électrique.

3. Rectifieuse selon la revendication 1, présentant en outre :
un palier excentrique (16) qui relie l'arbre du moteur à la plaque de support (19) de sorte que la plaque de support peut effectuer un mouvement orbital,
dans laquelle le flux d'air provenant des ouvertures (17) dans la plaque de support (19) vers la sortie (15), avec laquelle la poussière de meulage est éliminée, refroidit le palier excentrique (16).

4. Rectifieuse selon l'une des revendications 1 à 3,
dans laquelle la roue de ventilateur (13) et le clapet anti-retour (14) sont disposés de sorte que - en cas de non-extraction par la sortie (15) - l'air aspiré au moyen de la roue de ventilateur (13) à travers les ouvertures (17) dans la plaque de support (19) sort par le clapet anti-retour (14).

5. Rectifieuse selon l'une des revendications 1 à 4,
en cas de contre-pression à l'intérieur du boîtier (11) provoquée par la roue de ventilateur (13), l'air peut s'échapper de l'intérieur du boîtier (11) à travers le clapet anti-retour (14) dans l'environnement.

6. Rectifieuse selon l'une quelconque des revendications 1 à 5, comprenant en outre :
un câble pour alimenter le moteur (12), dans lequel le câble est guidé approximativement en spirale autour du boîtier (11).

7. Procédé de refroidissement d'une rectifieuse munie d'une plaque de support rotative (19) destinée à recevoir une meule ; le procédé comprend :
la génération d'une dépression à l'intérieur d'un boîtier (11) de la rectifieuse au moyen d'un système d'extraction relié à l'intérieur du boîtier (11) par l'intermédiaire d'une sortie d'air (15) ménagée dans une paroi de boîtier,
dans lequel la pression négative génère un flux d'air à travers des ouvertures (17) dans la plaque de support (19), qui transporte la poussière de meulage à l'intérieur du boîtier (11), qui est aspirée par la sortie (15) dans la paroi de boîtier, et
dans lequel le flux d'air refroidit également un moteur (12) disposé à l'intérieur du boîtier (11) ;
et dans lequel le procédé comprend, dans le cas d'un système d'extraction inactif :
la génération d'un flux d'air supplémentaire pour refroidir le moteur à travers les ouvertures (17) dans la plaque de support (19) au moyen d'une roue de ventilateur (13), ce qui génère une contre-pression à l'intérieur du boîtier (11) de sorte qu'un clapet anti-retour (14) disposé dans la paroi du boîtier s'ouvre et que le flux d'air supplémentaire peut s'échapper.

8. Procédé selon la revendication 7,
dans lequel la roue de ventilateur (13) est fixée à l'arbre du moteur (12) et forme un ventilateur axial.

9. Procédé selon la revendication 7 ou 8,
dans lequel le clapet anti-retour (14) est fermé lorsque le système d'extraction est actif.

10. Dispositif de rectification assistée par robot présentant :
un manipulateur ;
une rectifieuse selon l'une des revendications 1 à 6 ;
un actionneur linéaire (20) couplant la rectifieuse à un TCP du manipulateur ;
un système d'extraction qui est relié à la sortie (15) dans le boîtier (11) de la rectifieuse.

11. Dispositif selon la revendication 10,
dans lequel la direction effective de l'actionneur linéaire (20) s'étend sensiblement parallèlement à l'axe de rotation du moteur (12).

12. Dispositif selon la revendication 10 ou 11,
dans lequel le système d'extraction est relié à la sortie (15) par l'intermédiaire d'un tuyau qui est disposé approximativement en spirale autour du boîtier (11) de la rectifieuse et de l'actionneur linéaire.

13. Dispositif selon une des revendications 10 à 12,
dans lequel un câble nécessaire au fonctionnement de la rectifieuse est disposé approximativement le long d'une courbe en spirale autour de l'axe longitudinal du boîtier (11) de la rectifieuse et de l'actionneur linéaire (20), dans lequel une extrémité du câble est couplée mécaniquement au manipulateur.

14. Dispositif selon la revendication 13,
dans lequel le câble est disposé avec d'autres câbles dans un tuyau de câble (18).

15. Dispositif selon une des revendications 10 à 14,
dans lequel le système d'extraction est relié à une sortie (15) sur la rectifieuse par l'intermédiaire d'un tuyau (18) qui est disposé approximativement en spirale autour du boîtier (11) de la rectifieuse et de l'actionneur linéaire (20) et est fixé à une extrémité au manipulateur.
